Europäisches Patentamt

European Patent Office

Office européen des brevets

(19)

(11) Publication number: **0 040 962**
A2

## (12) EUROPEAN PATENT APPLICATION

(21) Application number: 81302267.0

(22) Date of filing: 21.05.81

(51) Int. Cl.³: **A 01 F 25/16, B 67 D 3/00,
B 01 D 57/00**

(30) Priority: 22.05.80 IE 1072/80

(43) Date of publication of application: 02.12.81
Bulletin 81/48

(84) Designated Contracting States: **AT BE CH DE FR IT LI
SE**

(71) Applicant: **Woodlock, Patrick Cyril, Rathdrum, Fethard
County Tipperary (IE)**

(72) Inventor: **Woodlock, Patrick Cyril, Rathdrum, Fethard
County Tipperary (IE)**

(74) Representative: **Boon, Graham Anthony et al, Elkington
and Fife High Holborn House 52/54 High Holborn,
London, WC1V 6SH (GB)**

(54) **Apparatus for the selective collection of liquid.**

(57) An apparatus for selectively collecting silage effluent draining from a silo at a variable flow rate comprises a delivery conduit (12) extending at a small upward angle into a housing (14) set into the ground. The housing contains two collecting vessels in the form of mutually parallel drainage channels (15, 16). In dry weather conditions the flow rate of silage effluent exiting from the outlet (13) of the conduit is at a low level. In such conditions the effluent has insufficient velocity to detach itself from the outlet (13) and runs back under the conduit (12) to drop off into the rear channel (15). In conditions of wet weather, however, the silage effluent is diluted with rainwater and exits from the outlet (13) at sufficient velocity to fall into the front channel (16). The rear channel (15) is connected via a pipe (17) to a slurry tank, whereas the front channel (16) is connected via a pipe (18) to any suitable drainage system.

Title:     Apparatus for the selective collection of
           liquid
           ----------------------------------------------

This invention relates to apparatus for the selective
collection of liquid supplied from a source at a variable
flow rate.

The collection and treatment of silage effluent is a
problem for many farmers.  Silage is normally stored in
partially or completely walled-in areas which are either
open or closed at the top.  Frequently silage storage areas
have three side walls and are open at the top.  Effluent
normally drains from the silage storage area (hereinafter
referred to as a silo) to the immediate area surrounding
the silo whereupon it enters a drainage system.  To assist
the flow of effluent from the silo, especially in the three
wall type, a sloping concrete floor area or "apron" is provided
which forms an extension of the silo floor.  The effluent drains
down the sloping area into an open drain from which it is
conveyed to an underground slurry tank.  Collection of silage
effluent in a slurry tank is now obligatory in many countries
so as to prevent the pollution of streams and rivers by drainage
of undiluted effluent thereinto.  Further, if silage effluent
is allowed to drain directly into the normal drainage system
on a farm it will often cause corrosion of pipes, depending on
the nature of the material used in the pipes, due to its high
acidity.  This high acidity is due to acids formed during the
fermentation processes involved in the production of silage,
as well as added acids such as formic acid and sulphuric acid.

Under dry conditions, the amount of effluent draining into the slurry tank is only a trickle. However, during heavy rain, the amount of liquid entering this slurry tank is substantial as storm water collects in the open effluent drain. Continuous heavy rain or a sudden downpour may alter the properties of the slurry considerably and make it unsuitable for spreading on land in the usual manner.

Certain drainage/sewage systems include a storm water overflow which is constructed so that it conducts a given maximum volume of effluent and storm water to a filter bed, forming part of the system, at any given time. Any additional effluent and storm water is diverted through the overflow and, therefore, by-passes the filter bed. However, no matter what the relative proportions of effluent and storm water, there will always be some transfer of effluent to the filter bed.

There is a need for apparatus, especially in the case of silage effluent, which will collect and deliver a liquid to a desired locus when the flow rate is relatively low but which will by-pass that locus at higher flow rates.

Accordingly, the invention provides apparatus for selectively collecting liquid supplied from a source at a variable flow rate, the apparatus comprising a delivery conduit feedable from the source and having an outlet orientated so as to deliver the liquid in a direction providing a horizontal component of velocity to the liquid, and a collecting vessel located below the delivery conduit and having an open top so disposed as to catch the liquid falling from the outlet of the delivery conduit provided the flow rate of the liquid remains at a relatively low level, higher flow rates causing the liquid to fall beyond the open top whereby the collecting vessel fails to collect the liquid.

Preferably, the apparatus comprises two collecting vessels, namely the aforementioned or first collecting vessel and a second collecting vessel having an open top located adjacent the open top of the first collecting vessel, the open top of the second collecting vessel being disposed so as to catch the falling liquid not caught by the first collecting vessel. Further, the collecting vessels are preferably drainage channels arranged mutually in parallel, and are located in a housing with each drainage channel communicating with a respective conduit for conveying liquid to a respective destination.

In the embodiment of the invention the liquid is silage effluent which is subject to periodic dilution by rain or storm water. In the absence of storm water the small amount of effluent exiting from the outlet of the delivery conduit has a very low velocity whereby the effluent runs back along the underside of the conduit until it drops off into the first collection vessel from which it enters a pipe for conveyance to an underground slurry tank. At greater flow rates, due to a dilution of the effluent with storm water, the velocity of the effluent exiting from the outlet of the delivery conduit is such that the diluted effluent overshoots the first collection vessel and is collected in the second collecting vessel for conveyance to a drainage system.

The invention will be understood from the following description of an embodiment thereof given by way of example only with reference to the accompanying drawings in which:

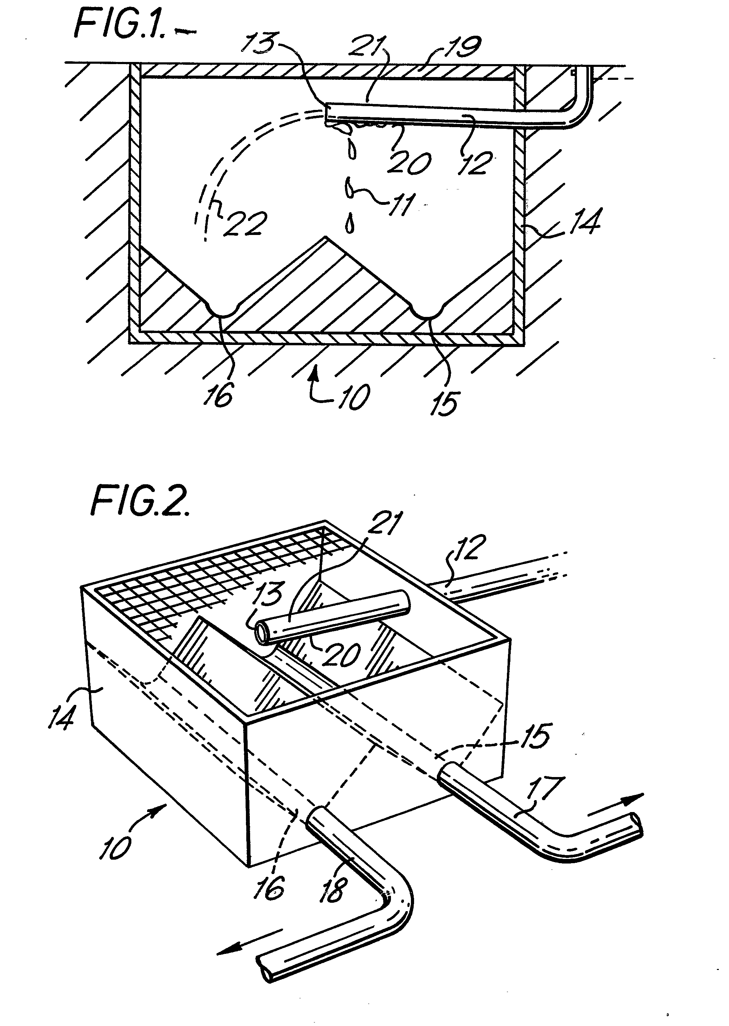

Fig. 1 is an end sectional elevation of an apparatus according to the invention; and

Fig. 2 is a perspective view of the apparatus of Fig. 1.

Apparatus 10 for selectively collecting silage effluent 11 draining from a silo (not shown) comprises a delivery conduit 12 for the effluent 11, the conduit 12 being fed from the silo and having an outlet 13 within a housing 14, the outlet being oriented so as to deliver the effluent 11 in a direction providing a horizontal component of velocity to the effluent. A pair of mutually parallel channels 15, 16 are arranged in the housing 14 below the outlet 13 of the delivery conduit 12. Each of the channels 15, 16 communicates with a respective pipe or conduit 17, 18 for delivery of liquid to a respective destination. The housing 14 is set in the ground and is covered by a removable lid or grid 19.

In dry conditions the flow of effluent 11 draining from the silo and exiting from the outlet 13 of the delivery conduit 12 is only a trickle, and has such a low velocity that it runs back along the underside 20 of the conduit 12 until it drops off into the drainage channel 15 from whence it is conveyed via the pipe 17 to an underground slurry tank (not shown) for storage. The end portion 21 of the conduit 12 adjacent the outlet 13 may be angled slightly upwards so as to facilitate the flow of effluent 11 back along the underside 20 of the conduit 12.

In wet weather or during a heavy downpour a combination 22 of effluent and storm water exits from the outlet 13 of the conduit 12 at such a velocity due to its greater flow rate that it overshoots the channel 15 and collects in the other drainage channel 16 from whence it is conveyed via the pipe 18 to a normal drainage system on the farm. Accordingly, it will be appreciated that under such conditions substantially no liquid is transferred to the slurry tank.

The conduits 12 and 17 and the drainage channel 15 should be composed of an inert material such as concrete or an acid resistant plastics material due to the corrosive nature of the effluent. The diluted liquid entering the drainage channel 16 and the pipe or conduit 18 is less corrosive and normal construction materials may be used.

The invention is not limited to the embodiment described above which may be modified and/or varied without departing from the scope of the invention.

CLAIMS:-

1. Apparatus for selectively collecting liquid supplied from a source at a variable flow rate, the apparatus being characterised by a delivery conduit (12) feedable from the source and having an outlet (13) orientated so as to deliver the liquid in a direction providing a horizontal component of velocity to the liquid, and a collecting vessel (15) located below the delivery conduit and having an open top so disposed as to catch the liquid (11) falling from the outlet (13) of the delivery conduit (12) provided the flow rate of the liquid remains at a relatively low level, higher flow rates causing the liquid (22) to fall beyond the open top whereby the collecting vessel (15) fails to collect the liquid.

2. Apparatus for selectively collecting silage effluent draining from a silage storage area at a variable flow rate, the apparatus being characterised by a delivery conduit (12) feedable from the silage storage area and having an outlet (13) orientated so as to deliver the effluent in a direction providing a horizontal component of velocity to the effluent, a collecting vessel (15) located below the delivery conduit (12) and having an open top so disposed as to catch the effluent (11) falling from the outlet (13) of the delivery conduit (12) provided the flow rate of the effluent remains at a relatively low level, higher flow rates causing the effluent (22) to fall beyond the open top whereby the collecting vessel (15) fails to collect the effluent, and means (17) for conveying effluent collected by the collecting vessel (15) to a slurry tank.

3. Apparatus according to claim 2, comprising a further collecting vessel (16) having an open top located adjacent the open top of the firstmentioned collecting vessel (15), the open top of the further vessel (16) being so disposed as to catch the falling effluent (22) not caught by the firstmentioned vessel (15).

4. Apparatus according to claim 3, further including means (18) for conveying the effluent (22) collected by the further collecting vessel (16) to a drainage system.

5.    Apparatus according to claim 4, wherein the firstmentioned and further vessels comprise mutually parallel drainage channels (15, 16).

6.    Apparatus according to claim 5, wherein the drainage channels (15, 16) are located in a housing (14) set in the ground.

7.    Apparatus according to claim 6, wherein each conveying means comprises a respective pipe (17,18) communicating with the slurry tank and drainage system respectively.

8.    Apparatus according to any one of claims 3 to 7, wherein the delivery conduit (12) extends upwardly at a small angle adjacent the outlet (13) whereby at a low level of effluent flow rate the effluent runs back along the underside (20) of the conduit (12) to fall into the firstmentioned collecting vessel (15), higher effluent flow rates causing the effluent to leave the outlet (13) at sufficient velocity to fall into the further collecting vessel (16).

FIG.1.—

1/1

0040962

FIG.2.